# EUROPEAN PATENT SPECIFICATION

(11) **EP 3 031 753 B1**
(45) Date of publication and mention of the grant of the patent: **19.07.2017**
(21) Application number: 15199430.8
(22) Date of filing: 10.12.2015
(51) Int. Cl.: B65G 25/08, F16F 1/02, B21D 43/28

(54) **SHEET MATERIAL HANDLING GROUP AND SPRING THEREFOR**
ANLAGE ZUR HANDHABUNG VON BLATTARTIGEM MATERIAL UND FEDER DAFÜR
GROUPE DE MANIPULATION DE MATÉRIAU EN FEUILLE ET SON RESSORT

(30) Priority: 10.12.2014 IT TO20141026
(43) Date of publication of application: 15.06.2016
(73) Proprietor: Gefin S.r.l., 10125 Torino (IT)
(72) Inventor: Getto, Piero, 10010 BANCHETTE (IT)
(74) Representative: Franzolin, Luigi

(56) References cited:
- JP-A- H02 300 012
- US-A1- 2014 353 891

## Description

The present invention relates to a sheet material handling group and to a spring therefor.

The present invention finds its preferred, although not exclusive, application in a sheet handling group in a shearing machine, for example for the production of caps for safety fasteners for bottle caps containing fizzy drinks. In the following, we will refer to this application, without loss of generality.

Known metal sheet handling groups comprise a support plate of the metal sheet housing an entrainment device movable with reciprocating movement in the sheet advancement direction. The entrainment device is configured to advance the metal sheet one step during its journey in the sheet advancement direction, and to disengage from the sheet during its journey in the opposite direction.

In order to do this, the entrainment device comprises a plurality of driving teeth, each of them acting in sequence to move the sheet one step further. These teeth are vertically slidable and are loaded upwards by respective springs yielding under the weight of the sheet, so that when a tooth is freed from the weight of the sheet it moves upwards and cooperates with an end edge of said sheet to move it one step further.

A problem associated with the aforesaid known solution is related to the vertical size of the springs associated with the teeth, which results in a relatively high overall vertical bulk of the entrainment device. JP H02 3000 12 A discloses such a handling group in accordance with the preamble of claim 12. An example of known spring is disclosed in US2014/353891 A1. The object of the present invention is to solve the aforementioned technical problem related to the known art described above.

Said object is achieved by means of a spring according to claim 12 and a handling group according to claim 1.

For a better understanding of the present invention hereinafter it is described a preferred embodiment, by way of non-limiting example and with reference to the accompanying drawings in which:
Figure 1 is a front view of a sheet handling group according to the invention;
Figure 2 is a top view of the group of Figure 1;
Figure 3 is a partial perspective view, on an enlarged scale,
of the group of Figure 1 with parts removed for clarity's sake;
Figure 4 is a section along the line IV-IV of Figure 1;
Figure 5 is a section according to the line V-V of Figure 2;
Figure 6 is a section along the line VI-VI of Figure 1;
Figure 7 is a top view of a spring of the group of Figure 1;
Figure 8 is a partial and enlarged view of the spring of Figure 7.

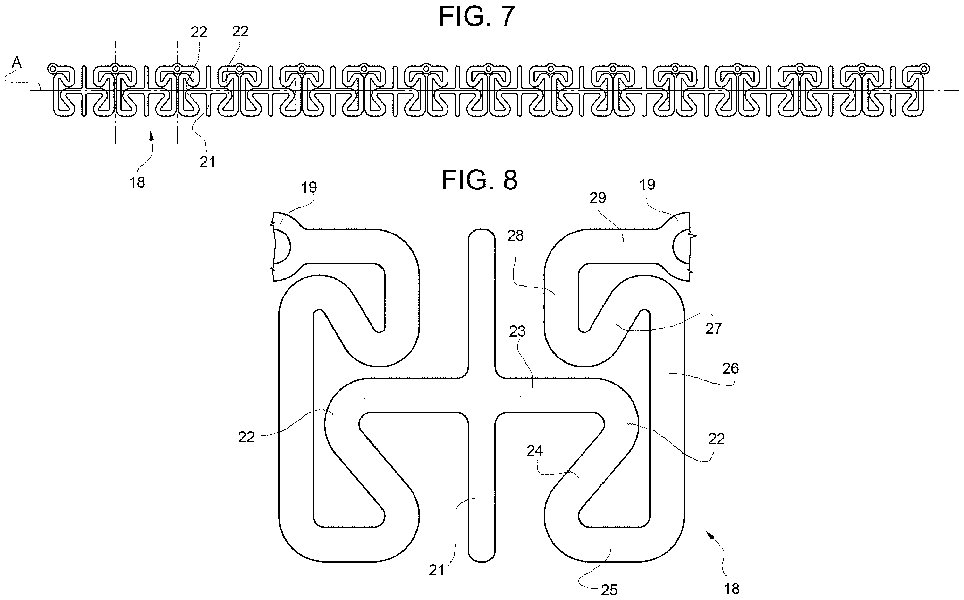

Figure 8 is a partial and enlarged view of the spring of Figure 7.

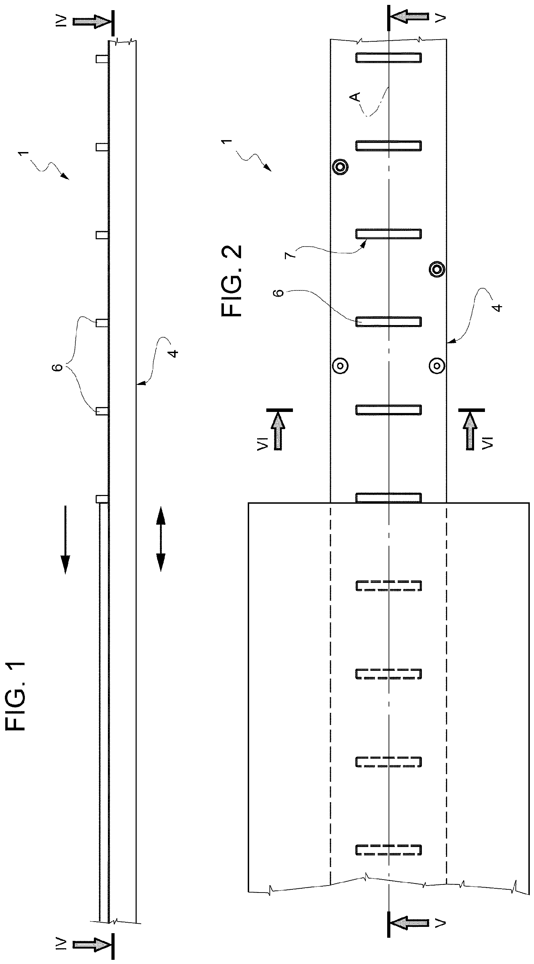

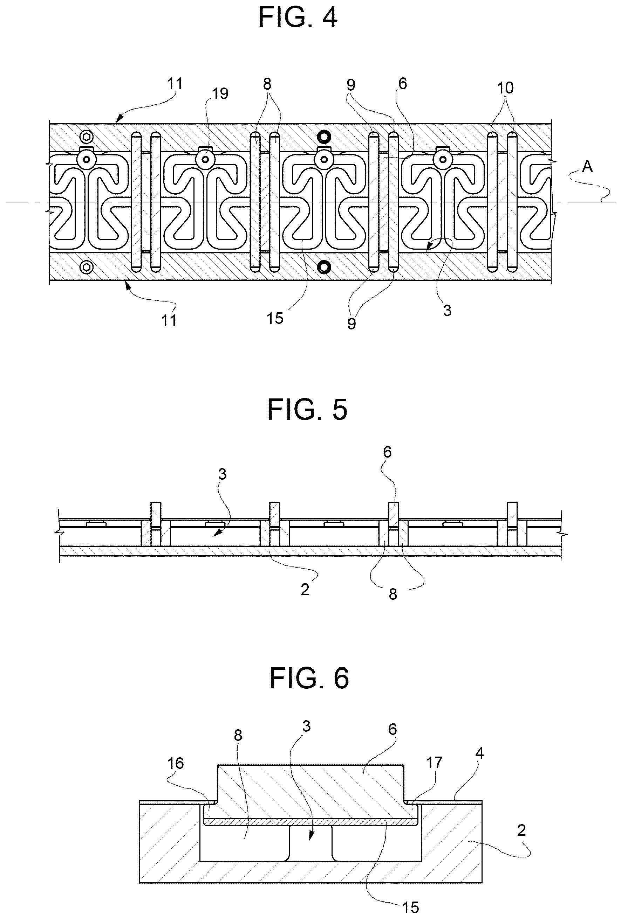

Figures 1 to 5 show a sheet handling group 1 for a notching machine.

The unit 1 comprises a tray 2 having a substantially rectangular shape, elongated in a direction parallel to a longitudinal axis A and defining a longitudinal cavity 3 limited by a pair of sidewalls 11. The tray 2 is closed at the top by a lid 4 (Figures 2) fixed to the tray 2 by means of a plurality of screws 5.

The tray 2 carries a plurality of teeth 6, equally spaced along the axis A, having an elongated shape in the transverse direction with respect to the axis A and vertically sliding within respective slots 7 of the lid 4. The teeth 6 are preferably formed by plates whose vertical motion is guided by pairs of parallel plates 8, transversely housed in the longitudinal cavity 3 of the tray 2. The plates 8 have respective ends 9 engaged in respective seats 10 formed in the sides 11 and have respective lower central recesses 12 whose purpose will be explained hereinafter.

The teeth 6 are loaded upwards by a spring 15 described in detail below and have respective side projections 16, 17 cooperating with the lid 4 to define an upper limit of excursion of the teeth 6.

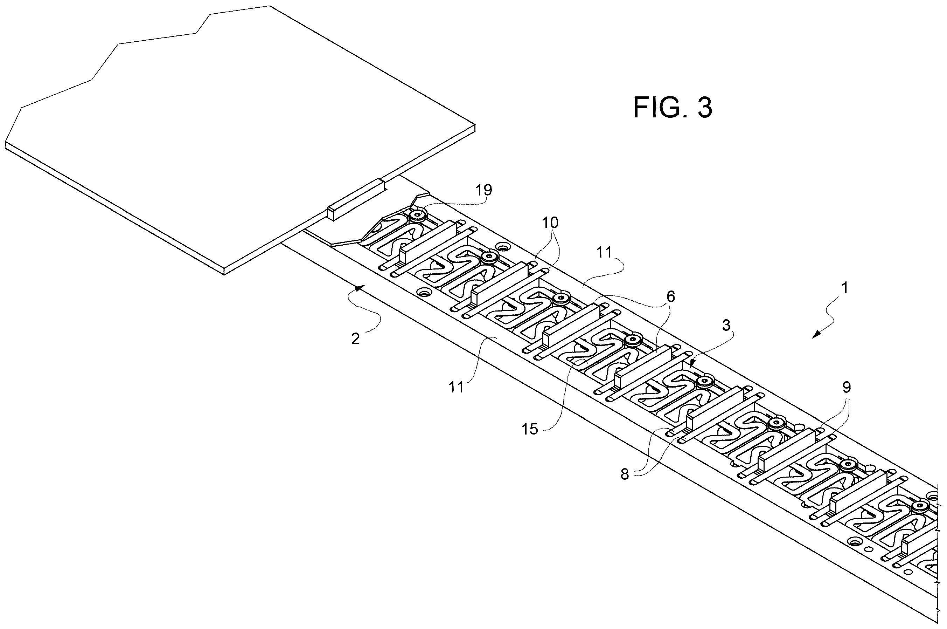

Referring to Figures 3, 4 and 7, the spring 15 is flat and is conveniently formed by blanking from a steel sheet. The spring 15 is housed in the cavity 3 below the teeth 6 and has a structure defined by the repetition of a module 18 along the axis A. The module 18 is illustrated in detail in Figure 8 and comprises substantially a constraining portion, e.g. a pair of end eyelets 19 to be fixed on a side 11 of the tray 2, an intermediate portion 21 shaped to cooperate with a base surface of the teeth 6, for example bar-shaped and extending transversely to the axis A, and respective mirroring elastic portions 22, connecting the intermediate portion 21 to each of the eyelets 19.

Each elastic portion 22 has a constant cross section along its length and comprises a first part 23 extending from the centre of the intermediate portion 21 along the axis A, a plurality of parts 24,25,26,27,28 interconnected by curved couplings forming a tortuous path, and a part 29 parallel to axis A and joining the buttonhole 19. The part 24 is oblique and inclined backwards towards the intermediate portion 21, the part 25 is parallel to the axis A and extends close of the side 11, opposite to the side coupled to the eyelet 19, the part 26 is transverse to the axis A and extends close to the eyelet 19, the part 27 is oblique and inclined towards the inside and towards the part 23, the part 28 is transverse to the axis A and connects the part 27 with the part 29. The length of the elastic portion 22, as described, is therefore continuous and free from intersections.

The intermediate portion 21 is housed between respective plates 8, in contact with a respective tooth 6 resting on said portion. The parts 24 connected to the intermediate portion 21 pass through the recesses 12 of the plates 8 to allow the lowering of the intermediate portion 21 under the thrust of the tooth 6 and the subsequent bending of the respective elastic portions 22 of the spring 15 without interfering with the plates 8.

The spring 15 is formed by a succession of previously described modules 18, each eyelet 19 being common to two adjacent modules. The eyelets 19 rest on respective projections, not shown, internally protruding from one side 11 to which the eyelets 19 are fixed by means of respective screws.

The operation of the spring 15 is as follows.

In use, the unit 1 is housed in a longitudinal seat of a pallet feeding the sheet, not shown. The unit 1 is movable, in known manner, with reciprocating motion along the axis A.

Once the sheet is resting on the pallet, and then on the group 1, the teeth 6 are lowered under the weight of the sheet and against the elastic action of the spring 15, until the plate rests on the lid 4 and the teeth 6 are retracted, flush with the lid 4. The motion of the teeth 6 is purely vertical because the plates 8 laterally guide it. Thanks to the reciprocating motion of the group 1, at each stroke in the advancement direction, a tooth 6 engaging a rear edge of the metal sheet pushes it forwards by a predetermined pitch, corresponding to the distance between two teeth or to a submultiple. When the unit 1 moves in the direction opposite to that of advancement, the sheet is retained on the pallet in a known manner, so that a successive tooth 6 of the device 1 comes out of the sheet to be arranged in a thrusting position in the next cycle. In the vertical motion of the teeth 6, the relative intermediate portion 21 of the spring 15 remains horizontal thanks to the symmetrical bending of the adjacent elastic portions 22. The contoured shape of these latter allows obtaining in a reduced space a remarkable free deflection length and therefore a sufficient flexibility of the spring.

The advantages obtainable by means of a spring according to the invention are obvious. Since the spring is formed from a flat sheet, its vertical size is very small compared to the vertical size of conventional springs. Furthermore, since the spring 15 is in one single piece, the group assembly is greatly simplified.

It is clear that the described exemplary embodiment can be subject to modifications or variations that fall within the scope of protection defined by the claims. For example, the conformation of the elastic portions 22 of the spring 15 may be different, provided that it guarantees sufficient flexibility and maintains a horizontal position of the adjacent intermediate portion 21. The plates 8 could be integral to the sides 11 of the tray 2 or could be replaced with inner projections of the sides.

## Claims

1. A sheet material handling group comprising a tray (2) movable with reciprocating motion along a longitudinal axis (A), a plurality of teeth (6) carried by said tray (2) and equally spaced along said axis (A), guiding means (8) for said teeth (6) configured to allow a vertical motion of limited excursion of said teeth (6) and elastic means (15) housed in said tray (2) and cooperating with said teeth (6) to exert an upward return force thereon, **characterized in that** said elastic means comprise a flat spring (15).

2. A group according to claim 1, **characterized in that** said tray (2) comprises a longitudinal cavity (3) housing said spring (15), said spring (15) comprising a plurality of constraining portions (19) fixed to said tray (2), a plurality of intermediate portions (21) cooperating with respective teeth (6) and a plurality of elastic portions (22) interposed between each intermediate portion (21) and a respective constraining portion (19).

3. A group according to claim 2, **characterized in that** said intermediate portions (21) are shaped to cooperate with a base surface of said teeth (6).

4. A group according to claim 3, **characterized in that** said intermediate portions (21) are bar-shaped and extend transversely with respect to said cavity (3).

5. A group according to any one of claims 2-4, **characterized in that** said elastic portions (22) extend along a tortuous path free from intersections.

6. A group according to any one of claims 2-5, **characterized in that** said elastic portions (22) have a substantially constant section over their entire length.

7. A group according to any one of claims 2-6, **characterized in that** said constraining portions (19) are arranged on the same side of said spring (15) and are connected to a side (11) of said tray (2) laterally limiting said cavity (3).

8. A group according to any one of claims 2-7, **characterized in that** said constraining portions (19) are eyelets.

9. A group according to any one of claims 4-8, **characterized in that** said elastic portions (22) comprise a first axial end part (23) integrally connected to a middle line of a respective intermediate portion (21), a second axial end part (29) connected to a respective constraining portion (19), an intermediate transversal portion (26) and a pair of connection parts (24,25; 28,29) between said intermediate part (26) and respective said first and second axial parts (23,29) forming a plurality of curves.

10. A group according to any one of claims 2-9, **characterized in that** said guiding means comprise, for each tooth (6), a pair of parallel plates (8) arranged on opposite sides of the tooth (6) transversely with respect to said cavity (3), said tooth (6) being interposed between said plates.

11. A group according to any one of claims 2-10, **characterized in that** said tray (2) comprises a lid (4) provided with a plurality of slots (7) wherein said teeth (6) slide, said teeth (6) being provided with respective lower side projections (16,17) cooperating with said lid (4) to define an upward stop for said teeth (6).

12. A spring for a sheet material handling group comprising a tray (2) movable with reciprocating motion along a longitudinal axis (A), a plurality of teeth (6) carried by said tray (2) and equally spaced along said axis (A), guiding means for said teeth (6) configured to allow a vertical motion of limited excursion of said teeth (6), **characterized in that** said spring (15) is flat and comprises a plurality of constraining portions (19) to be fixed to said tray (2) and a plurality of intermediate portions (21) equally spaced along said longitudinal axis (A) for cooperating with respective teeth (6) and a plurality of elastic portions (22) interposed between each intermediate portion (21) and a respective constraining portion (19).

13. A spring according to claim 12, **characterized in that** said intermediate portions (21) are shaped to cooperate with a base surface of said teeth (6).

14. A spring according to claim 13, **characterized in that** said intermediate portions (21) are bar-shaped and extend transversely with respect to said cavity (3).

15. A spring according to any one of claims 13-14, **characterized in that** said elastic portions (22) extend along a tortuous path free from intersections.

16. A spring according to any one of claims 13-15, **characterized in that** said elastic portions (22) have a substantially constant section over their entire length.

17. A spring according to any one of claims 13-16, **characterized in that** said constraining portions (19) are eyelets arranged on a single side of said spring (15).

18. A spring according to any one of claims 13-17, **characterized in that** said elastic portions (22) comprise a first axial end part (23) integrally connected to a middle line of a respective intermediate portion (21), a second axial end part (29) connected to a respective constraining portion (19), an intermediate transversal part (26) and a pair of connection parts (24,25; 28,29) between said intermediate part (26) and respective first and second axial parts (23,29) forming a plurality of curves.

## Patentansprüche

1. Anlage zur Bearbeitung von blattförmigem Material, umfassend eine Wanne (2), die mit reziproker Bewegung entlang einer Längsachse (A) bewegbar ist, eine Vielzahl von Zähnen (6), die von der Wanne (2) getragen werden und die gleichmäßig entlang der Achse (A) beabstandet sind, Führungsmittel (8) für die Zähne (6), die eingerichtet sind, eine vertikale Bewegung mit begrenztem Hub der Zähne (6) zu gestatten, und elastische Mittel (15), die in der Wanne (2) aufgenommen sind und mit den Zähnen (6) zusammenwirken, um eine nach oben gerichtete Rückstellkraft auf diese auszuüben, **dadurch gekennzeichnet, dass** die elastischen Mittel eine Blattfeder (15) umfassen.

2. Anlage nach Anspruch 1, **dadurch gekennzeichnet, dass** die Wanne (2) einen Längshohlraum (3) aufweist, der die Feder (15) aufnimmt, wobei die Feder (15) eine Vielzahl von an der Wanne (2) befestigten Halteabschnitten (19), eine Vielzahl von mit jeweiligen Zähnen (6) zusammenwirkenden Zwischenabschnitten (21) und eine Vielzahl von zwischen jedem Zwischenabschnitt (21) und einem jeweiligen Halteabschnitt (19) angeordneten elastischen Abschnitten (22) umfasst.

3. Anlage nach Anspruch 2, **dadurch gekennzeichnet, dass** die Zwischenabschnitte (21) geformt sind, um mit einer Grundfläche der Zähne (6) zusammenzuwirken.

4. Anlage nach Anspruch 3, **dadurch gekennzeichnet, dass** die Zwischenabschnitte (21) stabförmig sind und quer zum Hohlraum (3) verlaufen.

5. Anlage nach einem der Ansprüche 2 bis 4, **dadurch gekennzeichnet, dass** die elastischen Abschnitte (22) entlang eines gewundenen Pfads ohne Überschneidungen verlaufen.

6. Anlage nach einem der Ansprüche 2 bis 5, **dadurch gekennzeichnet, dass** die elastischen Abschnitte (22) über ihre gesamte Länge einen im Wesentlichen konstanten Querschnitt aufweisen.

7. Anlage nach einem der Ansprüche 2 bis 6, **dadurch gekennzeichnet, dass** die Halteabschnitte (19) auf der gleichen Seite der Feder (15) angeordnet sind und mit einer den Hohlraum (3) seitlich begrenzenden Seite (11) der Wanne (2) verbunden sind.

8. Anlage nach einem der Ansprüche 2 bis 7, **dadurch gekennzeichnet, dass** es sich bei den Halteabschnitten (19) um Ösen handelt.

9. Anlage nach einem der Ansprüche 4 bis 8, **dadurch gekennzeichnet, dass** die elastischen Abschnitte (22) ein einstückig mit einer Mittellinie eines entsprechenden Zwischenabschnitts (21) verbundenes erstes axiales Endteil (23), ein mit einem jeweiligen Halteabschnitt (19) verbundenes zweites axiales Endteil (29), einen Zwischenquerabschnitt (26) und ein Paar Verbindungsteile (24, 25; 28, 29) zwischen dem Zwischenteil (26) und jeweils den ersten und zweiten axialen Teilen (23, 29) umfassen, die eine Vielzahl von Kurven bilden.

10. Anlage nach einem der Ansprüche 2 bis 9, **dadurch gekennzeichnet, dass** die Führungsmittel für jeden Zahn (6) ein Paar paralleler Platten (8) umfassen, die auf gegenüberliegenden Seiten des Zahns (6) quer zum Hohlraum (3) angeordnet sind, wobei der Zahn (6) zwischen den Platten angeordnet ist.

11. Anlage nach einem der Ansprüche 2 bis 10, **dadurch gekennzeichnet, dass** die Wanne (2) einen mit einer Vielzahl von Schlitzen (7) versehenen Deckel (4) umfasst, in denen die Zähne (6) gleiten, wobei die Zähne (6) mit jeweiligen unterseitigen Vorsprüngen (16, 17) versehen sind, die mit dem Deckel (4) zusammenwirken, um einen Anschlag in Aufwärtsrichtung für die Zähne (6) zu definieren.

12. Feder für eine Anlage zur Bearbeitung von blattförmigem Material, die eine Wanne (2), die mit reziproker Bewegung entlang einer Längsachse (A) bewegbar ist, eine Vielzahl von Zähnen (6), die von der Wanne (2) getragen werden und die gleichmäßig entlang der Achse (A) beabstandet sind, und Führungsmittel (8) für die Zähne (6) umfasst , die eingerichtet sind, eine vertikale Bewegung mit begrenztem Hub der Zähne (6) zu gestatten, **dadurch gekennzeichnet, dass** die Feder (15) flach ist und eine Vielzahl von Halteabschnitten (19) zur Befestigung an der Wanne (2) und eine Vielzahl von Zwischenabschnitten (21), die gleichmäßig entlang der Längsachse (A) beabstandet sind, um mit jeweiligen Zähnen (6) zusammenzuwirken, sowie eine Vielzahl von elastischen Abschnitten (22) umfasst, die zwischen jedem Zwischenabschnitt (21) und einem jeweiligen Halteabschnitt (19) angeordnet sind.

13. Feder nach Anspruch 12, **dadurch gekennzeichnet, dass** die Zwischenabschnitte (21) geformt sind, um mit einer Grundfläche der Zähne (6) zusammenzuwirken.

14. Feder nach Anspruch 13, **dadurch gekennzeichnet, dass** die Zwischenabschnitte (21) stabförmig sind und quer zum Hohlraum (3) verlaufen.

15. Feder nach einem der Ansprüche 13 bis 14, **dadurch gekennzeichnet, dass** die elastischen Abschnitte (22) entlang eines gewundenen Pfads ohne Überschneidungen verlaufen.

16. Feder nach einem der Ansprüche 13 bis 15, **dadurch gekennzeichnet, dass** die elastischen Abschnitte (22) über ihre gesamte Länge einen im Wesentlichen konstanten Querschnitt aufweisen.

17. Feder nach einem der Ansprüche 13 bis 16, **dadurch gekennzeichnet, dass** es sich bei den Halteabschnitten (19) um auf einer einzigen Seite der Feder (15) angeordnete Ösen handelt.

18. Feder nach einem der Ansprüche 13 bis 17, **dadurch gekennzeichnet, dass** die elastischen Abschnitte (22) ein einstückig mit einer Mittellinie eines entsprechenden Zwischenabschnitts (21) verbundenes erstes axiales Endteil (23), ein mit einem jeweiligen Halteabschnitt (19) verbundenes zweites axiales Endteil (29), einen Zwischenquerteil (26) und ein Paar Verbindungsteile (24, 25; 28, 29) zwischen dem Zwischenteil (26) und jeweiligen ersten und zweiten axialen Teilen (23, 29) umfassen, die eine Vielzahl von Kurven bilden.

## Revendications

1. Groupe de manipulation de matériau en feuille comprenant un plateau (2) mobile avec un mouvement de va-et-vient le long d'un axe longitudinal (A), une pluralité de dents (6) portées par ledit plateau (2) et espacées de manière égale le long dudit axe (A), un moyen de guidage (8) pour lesdites dents (6) configuré pour permettre un mouvement vertical d'excursion limitée desdites dents (6) et un moyen élastique (15) logé dans ledit plateau (2) et coopérant avec lesdites dents (6) pour exercer une force de rappel ascendante sur celles-ci, **caractérisé en ce que** ledit moyen élastique comprend un ressort plat (15).

2. Groupe selon la revendication 1, **caractérisé en ce que** ledit plateau (2) comprend une cavité longitudinale (3) logeant ledit ressort (15), ledit ressort (15) comprenant une pluralité de portions de restriction (19) fixées audit plateau (2), une pluralité de portions intermédiaires (21) coopérant avec des dents respectives (6) et une pluralité de portions élastiques (22) interposées entre chaque portion intermédiaire (21) et une portion de restriction respective (19).

3. Groupe selon la revendication 2, **caractérisé en ce que** lesdites portions intermédiaires (21) sont façonnées pour coopérer avec une surface de base desdites dents (6).

4. Groupe selon la revendication 3, **caractérisé en ce que** lesdites portions intermédiaires (21) ont la forme de barres et s'étendent de manière transversale par rapport à ladite cavité (3).

5. Groupe selon l'une quelconque des revendications 2-4, **caractérisé en ce que** lesdites portions élastiques (22) s'étendent le long d'un chemin tortueux dépourvu d'intersections.

6. Groupe selon l'une quelconque des revendications 2-5, **caractérisé en ce que** lesdites portions élastiques (22) ont une section sensiblement constante sur toute leur longueur.

7. Groupe selon l'une quelconque des revendications 2-6, **caractérisé en ce que** lesdites portions de restriction (19) sont agencées sur le même côté dudit ressort (15) et sont reliées à un côté (11) dudit plateau (2) limitant latéralement ladite cavité (3).

8. Groupe selon l'une quelconque des revendications 2-7, **caractérisé en ce que** lesdites portions de restriction (19) sont des oeillets.

9. Groupe selon l'une quelconque des revendications 4-8, **caractérisé en ce que** lesdites portions élastiques (22) comprennent une première partie d'extrémité axiale (23) reliée d'un seul tenant à une ligne médiane d'une portion intermédiaire respective (21), une seconde partie d'extrémité axiale (29) reliée à une portion de restriction respective (19), une portion transversale intermédiaire (26) et une paire de parties de liaison (24, 25 ; 28, 29) entre ladite partie intermédiaire (26) et lesdites première et seconde parties axiales respectives (23, 29) formant une pluralité de courbes.

10. Groupe selon l'une quelconque des revendications 2-9, **caractérisé en ce que** ledit moyen de guidage comprend, pour chaque dent (6), une paire de plaques parallèles (8) agencées sur des côtés opposés de la dent (6) de manière transversale par rapport à ladite cavité (3), ladite dent (6) étant interposée entre lesdites plaques.

11. Groupe selon l'une quelconque des revendications 2-10, **caractérisé en ce que** ledit plateau (2) comprend un couvercle (4) pourvu d'une pluralité de fentes (7) dans lesquelles lesdites dents (6) coulissent, lesdites dents (6) étant pourvues de saillies latérales inférieures respectives (16, 17) coopérant avec ledit couvercle (4) pour définir une butée ascendante pour lesdites dents (6).

12. Ressort pour un groupe de manipulation de matériau en feuille comprenant un plateau (2) mobile avec un mouvement de va-et-vient le long d'un axe longitudinal (A), une pluralité de dents (6) portées par ledit plateau (2) et espacées de manière égale le long dudit axe (A), un moyen de guidage pour lesdites dents (6) configuré pour permettre un mouvement vertical d'excursion limitée desdites dents (6), **caractérisé en ce que** ledit ressort (15) est plat et comprend une pluralité de portions de restriction (19) à fixer audit plateau (2) et une pluralité de portions intermédiaires (21) espacées de manière égale le long dudit axe longitudinal (A) pour coopération avec des dents respectives (6) et une pluralité de portions élastiques (22) interposées entre chaque portion intermédiaire (21) et une portion de restriction respective (19).

13. Ressort selon la revendication 12, **caractérisé en ce que** lesdites portions intermédiaires (21) sont façonnées pour coopérer avec une surface de base desdites dents (6).

14. Ressort selon la revendication 13, **caractérisé en ce que** lesdites portions intermédiaires (21) ont la forme de barres et s'étendent de manière transversale par rapport à ladite cavité (3).

15. Ressort selon l'une quelconque des revendications 13-14, **caractérisé en ce que** lesdites portions élastiques (22) s'étendent le long d'un chemin tortueux dépourvu d'intersections.

16. Ressort selon l'une quelconque des revendications 13-15, **caractérisé en ce que** lesdites portions élastiques (22) ont une section sensiblement constante sur toute leur longueur.

17. Ressort selon l'une quelconque des revendications 13-16, **caractérisé en ce que** lesdites portions de restriction (19) sont des oeillets agencés sur un même côté dudit ressort (15).

18. Ressort selon l'une quelconque des revendications 13-17, **caractérisé en ce que** lesdites portions élastiques (22) comprennent une première partie d'extrémité axiale (23) reliée d'un seul tenant à une ligne médiane d'une portion intermédiaire respective (21), une seconde partie d'extrémité axiale (29) reliée à une portion de restriction respective (19), une partie transversale intermédiaire (26) et une paire de parties de liaison (24, 25 ; 28, 29) entre ladite partie intermédiaire (26) et lesdites première et seconde parties axiales respectives (23, 29) formant une pluralité de courbes.
